## Europäisches Patentamt
## European Patent Office
## Office européen des brevets

(11) Veröffentlichungsnummer: **0 129 030**
**A2**

(12) **EUROPÄISCHE PATENTANMELDUNG**

(21) Anmeldenummer: **84105012.3**

(22) Anmeldetag: **04.05.84**

(51) Int. Cl.³: **F 16 C 11/04**

(30) Priorität: **21.06.83 DE 3322178**

(43) Veröffentlichungstag der Anmeldung:
**27.12.84 Patentblatt 84/52**

(84) Benannte Vertragsstaaten:
**FR GB IT**

(71) Anmelder: **KEIPER RECARO GmbH & Co.**
**Büchelstrasse 54-58**
**D-5630 Remscheid 14(DE)**

(72) Erfinder: **Jörg, Horst**
**Schulstrasse 1**
**D-6751 Neuhemsbach(DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114**
**D-5600 Wuppertal 2(DE)**

(54) **Drehgelenk, insbesondere für Sitze mit verstellbarer Rückenlehne.**

(57) Bei einem Drehgelenk, das insbesondere für Sitze mit verstellbarer Rückenlehne Verwendung findet, sind zwei gegeneinander bewegbare Gelenkteile über eine Schwenkachse miteinander verbunden, wobei eine die Lage der Gelenkteile zueinander bestimmende, als Getriebe ausgebildete Ver- und Feststelleinrichtung vorgesehen ist. Die Schwenkachse ist von wenigstens einem Stirnzahnrad und einem damit kämmenden Innenzahnrad umfaßt. Das Tragzähne aufweisende Stirnzahnrad ist aus dem einen Leerzähne aufweisenden Gelenkteil ausgepreßt, während das ebenfalls Tragzähne aufweisende Innenzahnrad durch Auspressen einer Leerzähne aufweisenden Überbrückung aus dem anderen Gelenkteil gebildet ist. Im Verzahnungsbereich sind Werkstoff zum Kopf der Tragzähne hin verdrängende Vertiefungen zur Verminderung des Stanzeinzuges eingepreßt. Um neben der Verminderung des Stanzeinzuges insbesondere auch die Stabilität des Zahnfußes aufrechtzuerhalten, sind die Vertiefungen als zwischen den Leerzähnen von Innenzahnrad und Stirnzahnrad angeordnete, in Richtung auf die Tragzähne hinweisende Preßmulden ausgebildet.

EP 0 129 030 A2

./...

Croydon Printing Company Ltd

FIG. 2

PATENTANWÄLTE : 0129030··

DIPL.-PHYS. BUSE · DIPL.-PHYS. MENTZEL · DIPL.-ING. LUDEWIG

Unterdörnen 114 · Postfach 200210 · 5600 Wuppertal 2 · Fernruf (0202) 55 70 22 23 24 · Telex 8 591 606 wpat

37                                    5600 Wuppertal 2, den

Kennwort: "Preßmulden"


KEIPER RECARO GmbH & Co.,
Büchelstraße 54-58, 5630 Remscheid


---

Drehgelenk, insbesondere für Sitze mit verstellbarer
Rückenlehne

---


Die Erfindung betrifft ein Drehgelenk, insbesondere
für Sitze mit verstellbarer Rückenlehne, bei denen
zwei gegeneinander bewegbare Gelenkteile über eine
Schwenkachse miteinander verbunden sind, wobei eine
die Lage der Gelenkteile zueinander bestimmende, als
Getriebe ausgebildete Sperr- und Feststelleinrichtung
vorgesehen ist, deren Schwenkachse von wenigstens einem
Stirnzahnrad und einem damit kämmenden Innenzahnrad umfaßt ist, wobei das Wirkzähne aufweisende Stirnzahnrad
aus dem einen Leerzähne aufweisenden Gelenkteil ausgepreßt ist und das Wirkzähne aufweisende Innenzahnrad
durch Auspressen einer Leerzähne aufweisenden Überbrückung aus dem anderen Gelenkteil gebildet ist und
im Verzahnungsbereich Werkstoff zum Kopf der Wirkzähne
hin verdrängende Vertiefungen eingepreßt sind.

Die Gelenkteile bekannter Drehgelenke, bei denen sowohl das Stirnrad als auch das Innenzahnrad durch
Ausprägungen gebildet wird, erhalten durch einen
Feinstanzvorgang zentrisch zur Schwenkachse bzw. zu deren Exzenter ausgeprägte Ausdrückungen, durch die bei der Bildung eines Innenzahnrades dessen Wirkzähne feingeschnitten sind, während sich bei der Bildung eines Stirnrades dessen Wirkzähne an der Ausdrückung befinden. Diese durch einen Feinstanzvorgang gebildeten Wirkzähne weisen an ihren Zahnköpfen - ausgehend von der freien Stirnseite - zur Verbindungsstelle hinweisende Stanzeinzüge auf, so daß die Zähne an ihrer Stirnseite im Kopfbereich etwas angeschrägt bzw. abgerundet aussehen. Diese durch den Feinstanzvorgang bedingten Stanzeinzüge verringern die wirksame Zahnbreite, so daß der Stanzeinzug bei der kräftemäßigen Auslegung der Verzahnung zu berücksichtigen ist und als Zuschlag auf die tatsächlich tragende Zahnbreite hinzugerechnet werden muß, wenn die Stärke des Gelenkteiles gewählt wird. Somit war jeder Gelenkteil im Grunde stärker als er eigentlich gemäß den Festigkeitserfordernissen zu sein brauchte, wenn der Stanzeinzug vermeidbar gewesen wäre.

Um bei durch Feinstanzen geformten Wirkzähnen den Stanzeinzug an deren Zahnköpfen zu reduzieren, ist es gemäß der DE-OS 31 18 896 bekannt, im Verzahnungsbereich Vertiefungen anzupressen, durch welche zum Kopf der Wirkzähne hin Werkstoff verdrängt wird. Diese Vertiefungen sind bei der bekannten Ausführung durch im Bereich des Fußkreises sowohl des Stirnzahnrades als auch des Innenzahnrades eingepreßte Ringnuten gebildet. Obschon damit die Köpfe der Wirkzähne vom Stanzeinzug befreit und etwas scharfkantig sind, so tritt doch durch die Ringnuten im Bereich des Zahnfußes eine Schwächung am Fuß jeden Wirkzahnes auf, da die Anbindung des Wirkzahnes an seinen Zahnkörper nur über einen Teil seiner Zahnbreite verläuft.

Die Aufgabe der vorliegenden Erfindung besteht darin, unter Beibehaltung einer Reduzierung des Stanzeinzuges an den Zahnköpfen gleichzeitig eine Schwächung des Zahnfußes zu vermeiden.

Diese Aufgabe ist erfindungsgemäß dadurch gelöst, daß die Werkstoff zum Kopf der Wirkzähne hin verdrängenden Vertiefungen als zwischen den Leerzähnen von Innenzahnrad und Stirnzahnrad angeordnete, in Richtung auf die Tragzähne hinweisende Preßmulden ausgebildet sind. Diese praktisch neben den Wirkzähnen angeordneten Preßmulden wirken durch Werkstoffverdrängung in axialer Richtung und schwächen keinesfalls den Zahnfuß, d.h. den Übergang des Wirkzahnes zu seinem Tragkörper. Da sich zwischen dem Stirnzahnrad und seinem Gelenkteil einerseits und zwischen der Innenverzahnung und seiner Überbrückung andererseits jeweils ein radialer Verbindungssteg befindet, ist es vorteilhaft, wenn die Preßmulden in die Verbindungsstege zwischen Stirnzahnrad und dessen Gelenkteil einerseits und zwischen Innenzahnrad und dessen Überbrückung andererseits als pyramidenstumpfförmige Eindrückungen ausgebildet sind. Die geneigten Flächen der pyramidenstumpfförmigen Eindrückung schaffen einerseits sanfte, Kerbwirkungen vermeidende Übergänge und sorgen andererseits für eine gezielte Werkstoffverdrängung zum Zahnkopf der Wirkzähne hin.

Damit insbesondere dort, wo zur scharfkantigen Ausformung des Kopfes der Wirkzähne der größte Teil des zu verdrängenden Werkstoffes benötigt wird, dieser auch in ausreichendem Umfang zur Verfügung gestellt werden kann, sind nach einem weiteren Ausgestaltungsmerkmal der Erfindung die pyramidenstumpfförmigen Preßmulden etwa vom Bereich des Zahnkopfes der Leerzähne ausgehend mit einer zum Zahnkopf der Wirkzähne hinweisenden Neigung versehen, die etwa in die Verlängerung des Zahngrundes der Leerzähne übergeht. Dabei entsprechen die Preßmulden vorzugsweise mit ihrem den Verbindungssteg verlassenden Austrittsumriß der Kontur des Zahnzwischenraumes der Leerzähne. Dadurch wird zur Reduzierung des Stanzeinzuges am Kopf der Wirkzähne das größtmögliche Werkstoffvolumen zur Verfügung gestellt, so daß eine etwa scharfkantige Ausformung des Kopfes der Wirkzähne möglich ist.

Es ergeben sich damit die Vorteile, wonach sich die Zahndicke und mit der Zahndicke die Materialstärke des Gelenkteiles reduzieren läßt, ohne daß sich Festigkeitseinbußen ergeben. Denn selbst der zwischen den Zahnlücken der Leerzähne aus den Verbindungsstegen herausgepreßte Werkstoff stellt deshalb keine Schwächung zwischen dem Stirnzahnrad und dem zugehörigen Gelenkteil einerseits und zwischen dem Innenzahnrad und der zugehörigen Überbrückung andererseits dar, weil im Bereich der Leerzähne selbst der Verbindungssteg jeweils in vollem Umfang erhalten bleibt.

Die Erfindung ist in einem Ausführungsbeispiel in der Zeichnung dargestellt und wird nachfolgend näher erläutert. Es zeigen:

Fig. 1   ein Drehgelenk in einer Seitenansicht von der Bedienungsseite her gesehen,

Fig. 2   das aus Fig. 1 ersichtliche Drehgelenk in einem Längsschnitt nach der Linie II-II von Fig. 1, das im Bereich seiner Verzahnungsteile die erfindungsgemäß eingedrückten Preßmulden aufweist,

Fig. 3  den aus Fig. 2 ersichtlichen Zahneingriff von Innenzahnrad und Stirnzahnrad in einem gegenüber Fig. 2 vergrößerten Maßstab, ebenfalls in einem
Längsschnitt,

Fig. 4  das den Innenzahnkranz aufweisende
Gelenkteil in einer ausgebrochenen
Ansicht auf dessen Leerzähne gesehen
in Richtung des Pfeiles IV von Fig. 3,

Fig. 5  den aus Fig. 3 ersichtlichen, den
Innenzahnkranz aufweisenden und vereinzelt dargestellten Gelenkteil,

Fig. 6  den aus Fig. 3 ebenfalls ersichtlichen, vereinzelt dargestellten,
das Stirnrad aufweisenden Gelenkteil.

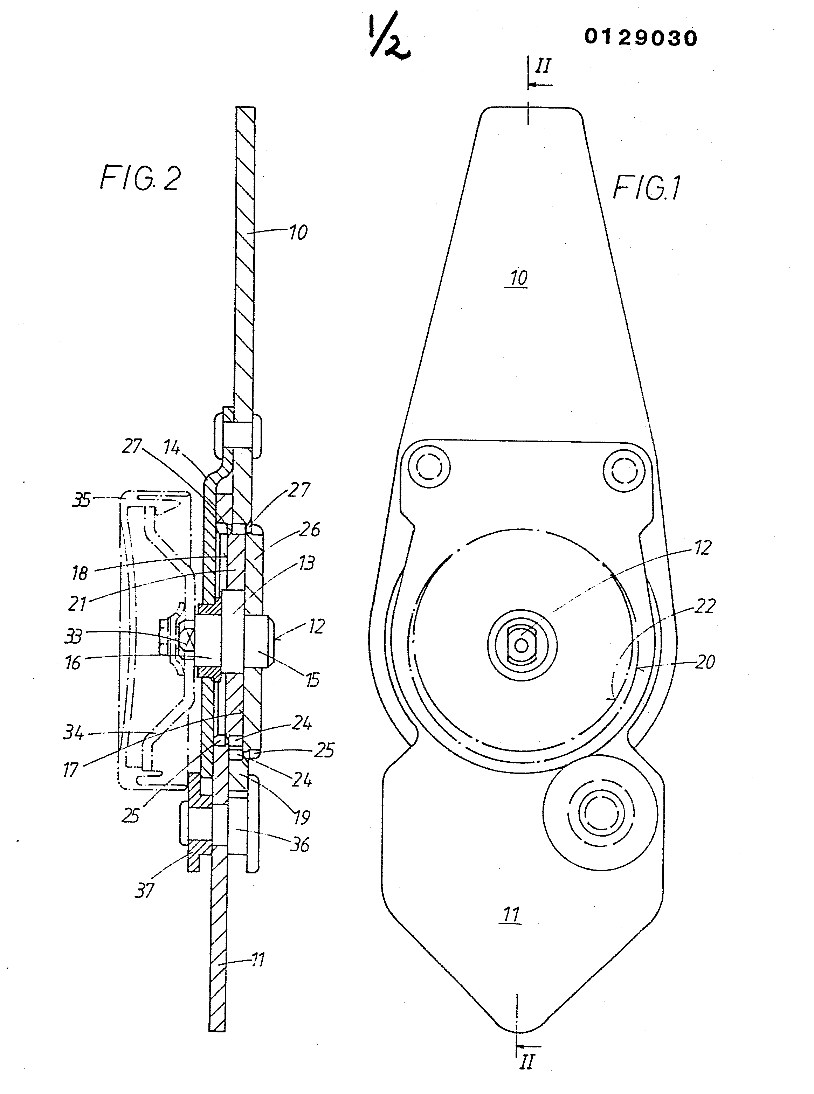

Die Rückenlehne eines Kraftfahrzeugsitzes ist mit dessen
Sitzteil vielfach über ein Drehgelenk schwenkbar verbunden. Dieses aus den Fig. 1 und 2 ersichtliche Drehgelenk weist einen mit der Rückenlehne verbindbaren
Gelenkteil 10 und einen mit dem Sitzteil verbindbaren
Gelenkteil 11 auf, wobei die beiden Gelenkteile über
eine Schwenkachse 12 drehbar miteinander verbunden sind.
Die Schwenkachse 12 weist einen Exzenterabschnitt 13
auf, auf welchem sich bei dem dargestellten Ausführungsbeispiel der mit dem Sitzteil verbindbare Gelenkteil 11
drehgelenkig abstützt. Der mit der Rückenlehne verbindbare Gelenkteil 10 ist beispielsweise durch Vernieten mit einer Stützlasche 14 fest verbunden, die
sich zusammen mit dem Gelenkteil 10 drehbar auf den
zentrischen Abschnitten 15 und 16 der Schwenkachse 12
abstützt.

Jeder der beiden Gelenkteile 10 und 11 weist eine Ausdrückung 17 bzw. 18 auf, wobei die Ausdrückung 17 des Gelenkteiles 10 eine einen Innenzahnrad 19 bildende Innenverzahnung 20 freigibt, während die Ausdrückung 18 als Stirnzahnrad 21 mit einer Außenverzahnung 22 ausgebildet ist.

Bei der das Stirnzahnrad 21 bildenden Ausdrückung 18 ist im Übergangsbereich zwischen dem Gelenkteil 11 und der Ausdrückung 18 ein radialer Verbindungssteg 23 sowie ein zweiter, zwischen dem Innenzahnrad 19 und der eine Überbrückung 26 bildenden Ausdrückung 17 vorhandener Verbindungssteg 23' des anderen Gelenkteiles 10 angeordnet, worüber eine einstückige Verbindung zwischen dem Gelenkteil 10 einerseits und der zugehörigen Ausdrückung andererseits geschaffen ist. Die jeweilige Ausdrückung 17 bzw. 18 wird in einem Feinstanzvorgang aus dem vorhandenen Gelenkteil 10 bzw. 11 ausgedrückt, wobei gleichzeitig die Verzahnung 20 des Innenzahnrad 19 bei dem einen Gelenkteil und entsprechend bei dem anderen Gelenkteil die Verzahnung 22 des Stirnzahnrades 21 mit angepreßt wird. Den auf der einen Seite angeformten, tragenden Zähnen 24 eines jeden Gelenkteiles 10 bzw. 11 entsprechen auf der anderen Seite Leerzähne 25, die in Umfangsrichtung gegenüber den Tragzähnen 24 um die halbe Zahnteilung versetzt sind.

In die Verbindungsstege zwischen den Leerzähnen 25 sind jeweils in Richtung auf die Tragzähne 24 hin eingetiefte Preßmulden 27 eingedrückt, wobei der daraus verdrängte Werkstoff zur Reduzierung des Stanzeinzuges am Kopf der Tragzähne 24 benutzt wird. Obschon die Raumform der Preßmulden 27 von der aus den Fig. ersichtlichen Form abweichen könnte, so ist es doch vorteilhaft, wenn die Preßmulden als pyramidenstumpfförmige Eindrückungen gebildet sind. Dabei erstrecken sich die pyramidenstumpfförmigen Preßmulden etwa vom Bereich des Zahnkopfes 28
der Leerzähne 25 ausgehend mit einer zum Zahnkopf 29 der
Tragzähne 24 hinweisenden Neigung 30, die etwa in eine
Verlängerung 31 des Zahngrundes 32 der Leerzähne 25 übergeht. Ihre größte Tiefe erreicht die Preßmulde 27 im
Bereich der Verlängerung 31 des Zahngrundes 32 der Leerzähne 25. Zur Vermeidung von Kerbwirkungen ist es vorteilhaft, wenn neben der etwas oberhalb des Zahnkopfes 28
der Leerzähne 25 beginnenden Neigung 30 auch die Seitenwandungen der Preßmulde 27 bis zu ihrem tiefsten Bereich
hin geneigt verlaufen. Dabei entspricht der Austrittsumriß der im Verbindungssteg 23 bzw. 23' angeordneten Preßmulden 27 zur Bildung der größtmöglichen Werkstoffverdrängung im wesentlichen der Kontur des Zahnzwischenraumes
der Leerzähne 25.

Bei dem aus der Ausdrückung 18 bestehenden Stirnrad 21
ist dessen Kopfkreis mindestens um eine Zahnhöhe kleiner
als der Fußkreis des die Ausdrückung 17 umfassenden,
eine Innenverzahnung 20 aufweisenden Innenzahnrades 19
Die Zähnezahlen des Innenzahnrades 19 und des Stirnzahnrades 21 unterscheiden sich um wenigstens einen Zahn,
so daß bei Drehung der Schwenkachse 12 eine Relativbewegung zwischen dem Innenzahnrad 19 und dem Stirnzahnrad 21 und somit auch zwischen den Gelenkteilen 10 und
11 zustande kommt. Dabei hält der Exzenterabschnitt 13
der Schwenkachse 12 die Innenverzahnung 20 an einer
Stelle im Eingriff mit der Außenverzahnung 22 des auf
dem Exzenterabschnitt 13 der Schwenkachse drehbar gelagerten Stirnrades 21.

Der in einer Bundbuchse der Stützlasche 14 gelagerte,
zentrische Abschnitt 16 der Schwenkachse 12 tritt mit einem Zapfen 33 über die Stützlasche 14 nach außen vor, wobei dieser Zapfen auf zwei einander gegenüberliegenden Seiten mit einer Anflachung versehen ist. Dieser Zapfen 33 dient der drehfesten Aufnahme einer in strichpunktierten Linien in Fig. 2 dargestellten Mitnehmerscheibe 34, an der ein ebenfalls strichpunktiert dargestelltes Handrad 35 befestigt ist. Zur Sicherung des axialen Zusammenhaltes zwischen den Gelenkteilen 10 und 11 dient beispielsweise ein in dem Gelenkteil 11 festgelegter Kopfbolzen 36, der einerseits mit seinem Kopfansatz die Randzone des Innenzahnrades 19 übergreift und andererseits mit einem Bund der Buchse 37 die Randzone der Stützlasche 14 in radialer Richtung überragt. Zur Befestigung der Gelenkteile 10 und 11 an der Rückenlehne bzw. am Sitzteil mögen entweder nicht dargestellte Befestigungsschrauben oder aber ebenfalls nicht dargestellte Buckelsicken zur Schweißverbindung dienen.

Zur Herstellung von einstückig mit den Gelenkteilen verbundenen, Verzahnungen aufweisenden Ausdrückungen, die durch Feinstanzen aus einem ebenen Blechzuschnitt ausgedrückt sind, lassen sich in einem Folgeschritt des Feinstanzvorganges die Preßmulden zwischen den Leerzähnen eindrücken, so daß der aus den Preßmulden verdrängte Werkstoff zwangsläufig zu den Zahnköpfen hin abfließt und den sonst üblichen Stanzeinzug am Zahnkopfbereich wesentlich reduziert.

Wie bereits erwähnt, ist die dargestellte Ausführung lediglich eine beispielsweise Verwirklichung der Erfindung, die keinesfalls allein darauf beschränkt ist. Es sind vielmehr noch manche andere Ausführungen und Ausgestaltungen der Erfindung möglich. So ist es beispielsweise denkbar, daß die Preßmulden bei allen Zahnrädern eingesetzt werden können, die aus einem Blechzuschnitt ausgepreßt werden, um den Stanzeinzug am
Zahnkopf zu vermindern. Dabei versteht es sich, daß derartig hergestellte Zahnräder nicht auf den vorbeschriebenen Anwendungsfall eines Drehgelenkes für Fahrzeugsitze beschränkt sind, sondern auch bei anderen Stellgetrieben, wie beispielsweise Sitzlängsverstellvorrichtungen, Sitzhöhenverstellvorrichtungen, Fensterheber
od.dgl. verwendet werden können.

37

5600 Wuppertal 2, den

Kennwort: "Preßmulden"

KEIPER RECARO GmbH & Co.,
Büchelstraße 54-58, 5630 Remscheid

---

A n s p r ü c h e :

---

1.) Drehgelenk, insbesondere für Sitze mit verstellbarer Rückenlehne, bei denen zwei gegeneinander bewegbare Gelenkteile über eine Schwenkachse miteinander verbunden sind, wobei eine die Lage der Gelenkteile zueiander bestimmende, als Getriebe ausgebildete Ver- und Feststelleinrichtung vorgesehen ist, deren Schwenkachse von wenigstens einem Stirnzahnrad und einem damit kämmenden Innenzahnrad umfaßt ist, wobei das Tragzähne aufweisende Stirnzahnrad aus dem einen Leerzähne aufweisenden Gelenkteil ausgepreßt ist und das Tragzähne aufweisende Innenzahnrad durch Anpressen einer Leerzähne aufweisenden Überbrükkung aus dem anderen Gelenkteil gebildet ist und im Verzahnungsbereich Werkstoff zum Kopf der Tragzähne hin verdrängende Vertiefungen eingepreßt sind,

d a d u r c h   g e k e n n z e i c h n e t ,

daß die Vertiefungen als zwischen den Leerzähnen (25) von Innenzahnrad (19) und Stirnzahnrad (21) angeordnete, in Richtung auf die Tragzähne (24) hinweisende Preßmulden (27) ausgebildet sind.

2.) Drehgelenk nach Anspruch 1, dadurch gekennzeichnet, daß die Preßmulden (27) in die Verbindungsstege (23, 23') zwischen Stirnzahnrad (21) und dessen Gelenkteil (11) einerseits und zwischen Innenzahnrad (19) und dessen Überbrückung (26) andererseits als pyramidenstumpfförmige Eindrückungen ausgebildet sind.

3.) Drehgelenk nach Anspruch 2, dadurch gekennzeichnet, daß die pyramidenstumpfförmigen Preßmulden (27) etwa vom Bereich des Zahnkopfes (28) der Leerzähne (25) ausgehend mit einer zum Zahnkopf (29) der Tragzähne (24) hinweisenden Neigung (30) versehen sind, die etwa in die Verlängerung (31) des Zahngrundes (32) der Leerzähne (25) übergeht.

4.) Drehgelenk nach einem oder mehreren der vorhergehenden Ansprüche, dadurch gekennzeichnet, daß die Preßmulden (27) mit ihrem den Verbindungssteg (23, 23') verlassenden Austrittsumriß der Kontur des Zahnzwischenraumes der Leerzähne (25) entsprechen.

PATENTANWÄLTE

DIPL.-PHYS. BUSE · DIPL.-PHYS. MENTZEL · DIPL.-ING. LUDEWIG
Unterdörnen 114 · Postfach 200210   5600 Wuppertal 2 · Fernruf (0202) 55 70 22/23/24 · Telex 8 591 606 wpat

0129030

5600 Wuppertal 2. den
<u>Kennwort:</u> "Preßmulden"

KEIPER RECARO GmbH & Co.,
Büchelstraße 54-48, 5630 Remscheid

B e z u g s z e i c h e n l i s t e :

| | | | |
|---|---|---|---|
| 10 | Gelenkteil | 28 | Zahnkopf von 25 |
| 11 | Gelenkteil | 29 | Zahnkopf von 24 |
| 12 | Schwenkachse | 30 | Neigung von 27 |
| 13 | Exzenterabschnitt | 31 | Verlängerung |
| 14 | Stützlasche | 32 | Zahngrund |
| 15 | Abschnitt | 33 | Zapfen |
| 16 | Abschnitt | 34 | Mitnehmerscheibe |
| 17 | Ausdrückung | 35 | Handrad |
| 18 | Ausdrückung | 36 | Kopfbolzen |
| 19 | Innenzahnrad | 37 | Buchse |
| 20 | Innenverzahnung | | |
| 21 | Stirnzahnrad | | |
| 22 | Außenverzahnung | | |
| 23 | Verbindungssteg | | |
| 23' | Verbindungssteg | | |
| 24 | Tragzahn | | |
| 25 | Leerzahn | | |
| 26 | Überbrückung | | |
| 27 | Preßmulde | | |

DIPL.-PHYS. BUSE · DIPL.-PHYS. MENTZEL · DIPL.-ING. LUDEWIG
Unterdörnen 114 · Postfach 200210   5600 Wuppertal 2 · Fernruf (0202) 55 70 22/23/24 · Telex 8 591 606 wpat

FIG. 2

FIG.1

KEIPER

27    10

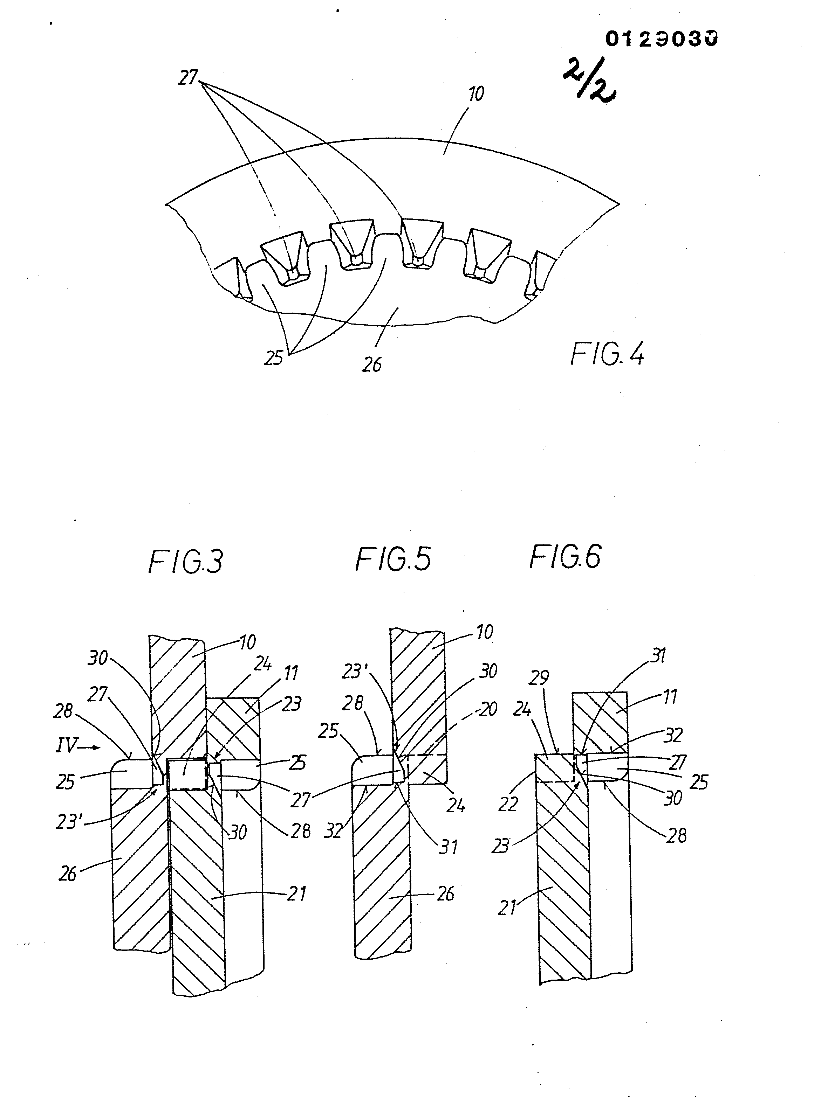

25    26    FIG. 4

FIG.3        FIG.5        FIG.6